# EUROPEAN PATENT APPLICATION

(11) **EP 4 369 125 A1**
(43) Date of publication of application: **15.05.2024**
(21) Application number: 22206183.0
(22) Date of filing: 08.11.2022
(51) Int. Cl.: G05B 19/418, B29C 44/00

(54) **A METHOD OF OPERATING AT LEAST ONE APPARATUS FOR PROCESSING EXPANDABLE OR EXPANDED POLYMER PARTICLES**

(71) Applicant: JSP International SARL, 60190 Estrées-Saint-Denis (FR)
(72) Inventor: PLUSKA, Robert, 60190 Estrees St. Denis (FR); BRAIMLLARI, Xheni, 60190 Estrees St. Denis (FR); BUSTAMANTE, Alberto, 60190 Estrees St. Denis (FR); TALACCHINI, Alessandro, 60190 Estrees St. Denis (FR)
(74) Representative: Hafner & Kohl PartmbB

(57) **Abstract**

A method of operating at least one apparatus (20) for processing expandable or expanded polymer particles to form a particle foam component (30), the method comprising:
- receiving, at at least one data processing unit (40), a parameter data set specifying at least one of: at least one parameter of at least one primary process for processing expandable or expanded polymer particles, e.g. to form a particle foam component (30), at least one parameter of at least one secondary process for processing a particle foam component (30), or at least one parameter of a particle foam component (30);
- evaluating, via the at least one data processing unit (40), the parameter data set with respect to at least one evaluation criterion and generating an evaluation data set indicative of at least one current or future deviation of at least one parameter specified by the parameter data set with respect to the at least one evaluation criterion; and
- operating at least one apparatus (20) for processing expandable or expanded polymer particles based on the evaluation data set.

## Description

A method of operating at least one apparatus for processing expandable or expanded polymer particles.

The invention relates to a method of operating at least one apparatus for processing expandable or expanded polymer particles, particularly polyolefin particles, to form a particle foam component.

Methods of operating at least one apparatus for processing expandable or expanded polymer particles, particularly polyolefin particles, to form a particle foam component have been widely known in the art.

Respective methods typically, comprise setting one or more process parameters to facilitate operation of a respective apparatus for processing expandable or expanded polymer particles to form particle foam components of desired quality. Further, one or more process parameters, such as steam temperature, steam pressure, etc., can be set to achieve a desired energy consumption during the operation of the respective apparatus for processing expandable or expanded polymer particles.

Hitherto, the setting of respective process parameters is mostly done on the basis of the personal experience of an operator of a respective apparatus for processing expandable or expanded polymer particles to form particle foam components. The operator typically, knows e.g. from tests, from comparable prior processes, etc. which process parameters are to be set in which manner and manually sets the process parameters accordingly to specific values to receive a desired result.

Even though this known approach can lead to particle foam components of desired quality, the setting of process parameters is operator-based and thus, individual such that there exists a demand for a principle facilitating an improved, particularly automatable, operation of at least one apparatus for processing expandable or expanded polymer particles to form a particle foam component, particularly with respect to a more comprehensive analysis of the process which enables a further optimization of the process to enable increased quality of the process and the particle foam components resulting therefrom.

It is thus, the object of the invention to provide an improved method of operating at least one apparatus for processing expandable or expanded polymer particles.

The object is achieved by the subject-matter of the independent claims. The subject-matter of the dependent claims relates to possible embodiments of the subject-matter of the independent claims.

A first aspect of the invention relates to a method of operating at least one apparatus for processing expandable or expanded polymer. The method thus, generally facilitates operating at least one apparatus for processing expandable or expanded polymer particles.

As will be apparent from below, operating at least one apparatus for processing expandable or expanded polymer particles typically, comprises controlling operation of the at least one apparatus for processing expandable or expanded polymer particles. Controlling of the at least one apparatus for processing expandable or expanded polymer particles can comprise adjusting one or more parameters, particularly process parameters, to influence processing of the expandable or expanded polymer particles. As will be apparent from further below, the at least one apparatus for processing expandable or expanded polymer particles is configured to perform at least one primary process for processing expandable or expanded polymer particles, e.g. to form a particle foam component.

A respective primary process can comprise pre-treatment, particularly chemically and/or physically pre-treatment, of expandable or expanded polymer particles which are then to be fused to form a particle foam component. Alternatively or additionally, a respective primary process can comprise fusing respective expandable or expanded polymer particles to form at least one particle foam component. Alternatively or additionally, a respective primary process can comprise a post-treatment of at least one particle foam component. As such, controlling of the at least one apparatus for processing expandable or expanded polymer particles can comprise adjusting one or more parameters, particularly process parameters, to influence processing of the expandable or expanded polymer particles to obtain an increased quality of the at least one primary process and the expandable or expanded polymer particles or particle foam components resulting from the at least one primary process.

The method thus, generally implements steps for processing expandable or expanded polymer particles in at least one primary process, e.g. to form at least one particle foam component, via at least one apparatus for processing expandable or expanded polymer particles. Respective steps can be or comprise: processing expandable or expanded polymer particles in at least one chemical and/or physical pre-treatment process to obtain pre-treated expandable or expanded polymer particles which can be fused together, particularly under the application of heat, to form a particle foam component. Alternatively or additionally, respective steps can be or comprise at least one of: filling a mold cavity of a mold of a mold device of a respective apparatus for processing expandable or expanded polymer particles with expandable or expanded polymer particles, fusing the expandable or expanded polymer particles within the mold cavity to form at least one particle foam component, and removing the at least one particle foam component from the mold cavity. Fusing of the expandable or expanded polymer particles within the mold cavity can comprise applying thermal energy, e.g. via chemical processes, e.g. exothermic chemical processes, electromagnetic radiation, such as IR-radiation, RF-radiation, etc., or via heated fluids, such as gas, steam, etc., to the expandable or expanded polymer particles which causes the expandable or expanded polymer particles to fuse together thereby, forming at least one particle foam component. Alternatively or additionally, respective steps can comprise processing a particle foam component in at least one chemical and/or physical post-treatment process to obtain a post-processed particle foam component which can then undergo at least one secondary process.

Expandable or expanded polymer particles can be or can comprise expandable or expanded polyolefin particles. Non-limiting examples of expandable or expanded polymer bead materials which can be processed in the method are expandable or expanded polyester-based bead materials, such as expanded or expandable polycarbonate-based materials (EPC), expanded or expandable polyethylene-terephthalate-based materials (EPET), expanded or expandable polylactic-acid-based materials (EPLA), expandable or expanded polyolefin-based bead materials (EPO-materials), expandable or expanded polyamide-based bead materials (EPA-materials), or expandable or expanded polyurethane-based bead materials (ETPU-materials). As such, expandable or expanded polyolefin particles can comprise one or more polyolefin particles of the following group: polypropylene (PP), polypropylene blend, polyethylene (PE), polyethylene blend, polyethylene-polypropylene blends, co-polymers of ethylene and at least one other olefinic monomer, copolymer of propylene and at least one other olefinic monomer and/or mixtures of the aforementioned, such as EPP and EPE. Accordingly, blends or mixtures containing at least one thermo-plastic polyolefin-based plastic material can be included, e.g. modified polyolefin (mPO) or ETPO. Further, hybrid-polymer particles, core-shell polymer particles comprising a polymer core containing at least one olefinic component and/or a polymer shell containing at least one olefinic component, or co-polymer particles containing at least one olefinic component, such as e.g. EVA, EPP/PS, PP/EPS, EPE/PS, PE/EPS can be included.

The method comprises in a first step: receiving, at at least one data processing unit, a parameter data set specifying at least one of: at least one parameter of at least one primary process for processing expandable or expanded polymer particles, e.g. to perform a respective pre-treatment, to form a particle foam component or to perform a respective post-treatment, at least one parameter of at least one secondary process for further processing an already formed particle foam component, or at least one parameter of a particle foam component which has been formed or which is to be formed. Hence, the first step of the method comprises receiving a parameter data set indicative of at least one parameter of at least one primary process for processing expandable or expanded polymer particles e.g. to perform a respective pre-treatment, to form a particle foam component or to perform a respective post-treatment, at least one parameter of at least one secondary process for further processing a particle foam component, or at least one parameter of a particle foam component which has been formed or which is to be formed. The data processing unit can thus, receive one or more parameters of at least one primary process for processing expandable or expanded polymer particles, e.g. to perform a respective pre-treatment, to form a particle foam component, or to perform a respective post-treatment; respective parameters can be process parameters of at least one primary process for processing expandable or expanded polymer particles, e.g. for a respective pre-treatment of expandable or expanded polymer particles, for forming a particle foam component, or for a respective post-treatment of at least one particle foam component, or information specifying same, respectively. Respective process parameters can be deemed as primary process parameters because they relate to a primary process in which expandable or expanded polymer particles are processed, e.g. for a pre-treatment of expandable or expanded polymer particles, for forming at least one particle foam component, or for a post-treatment of a respective particle foam component. As such, a respective primary process can comprise a pre-treatment of expandable or expanded polymer particles and/or fusing of expandable or expanded polymer particles to form at least one particle foam component and/or a post-treatment of at least one particle foam component, for instance.

A respective primary process for pre-treatment expandable or expanded polymer particles can comprise a chemical and/or physical pre-treatment of respective expandable or expanded polymer particles to obtain pre-treated expandable or expanded polymer particles which can be fused together to form a particle foam component. A respective chemical and/or physical pre-treatment can comprise setting out particles under specific chemical and/or physical conditions, such as a specific chemical and/or physical atmosphere, temperature, pressure, humidity, etc., and/or treating particles with at least one specific chemical and/or physical pre-treatment agent, such as a chemical and/or physical blowing agent, for instance. As an example, a respective pre-treatment can comprise setting out particles in a specific chemical atmosphere under high pressure and/or temperature which enables that a chemical and/or physical blowing agent can be absorbed with respective particles, e.g. via diffusion processes. As another example, a respective pre-treatment can comprise wetting particles with an activator agent, particularly a chemical activator agent, and subsequent drying of the particles; respective particles could then be fused together in a so-called Atecarma-process. As such, combinations of different pre-treatment processes are conceivable.

A respective primary process for processing expandable or expanded polymer particles to form a particle foam component can be or comprise a convective or non-convective process in which expandable or expanded polymer particles, which have possibly previously undergone a pre-treatment, are fused together to form a particle foam component. As such, the at least one primary process for processing expandable or expanded polymer particles to form a particle foam component can comprise at least one of: chemical or exothermic molding, steam-chest molding, in-mold foaming of expandable gas-loaded polymer particles, convection molding, wave-molding, RF-molding, for instance. Also, the at least one primary process could be a so-called Atecarma-molding process. Hence, an apparatus for processing expandable or expanded polymer particles to form a particle foam component can be configured to implement at least one of chemical or exothermic molding, steam-chest molding, in-mold foaming of expandable gas-loaded polymer particles, convection molding, wave-molding, RF-molding, so-called Atecarma-molding for instance.

A respective primary process for post-treatment of at least one particle foam component can comprise a chemical and/or physical post-treatment of a respective particle foam component to obtain at least one post-treated particle foam component. A respective chemical and/or physical post-treatment can comprise setting out at least one particle foam component under specific chemical and/or physical conditions, such as a specific chemical and/or physical atmosphere, temperature, pressure, humidity, etc., and/or treating at least one particle foam component with at least one specific chemical and/or physical post-treatment agent. As an example, a respective post-treatment can comprise setting out at least one particle foam component in a specific chemical atmosphere under high pressure and/or temperature which enables that a chemical and/or physical blowing agent can be removed. As another example, a respective post-treatment can comprise setting out at least one particle foam component in a specific chemical and/or physical atmosphere to assure desired dimensions of the particle foam component.

Alternatively or additionally, the data processing unit can receive one or more parameters of at least one secondary process for further processing a particle foam component; the data processing unit can thus, receive process parameters of at least one secondary process for further processing a particle foam component. Respective process parameters can be deemed as secondary process parameters because they relate to a secondary process in which at least one particle foam component which has been formed in the or a primary process is further processed. A respective secondary process can comprise post-processing of the particle foam component, providing the particle foam component with additional constructive and/or functional features, connecting the particle foam component with at least one other component to form a component assembly, for instance. As such, a respective secondary process can comprise at least one of: a chemical and/or physical connecting process, e.g. a gluing process, a welding process, particularly an ultrasonic-welding process, in which a respective particle foam component is connected to another component to form a component assembly; a machining process in which a respective particle foam component is machined, e.g. by cutting, drilling, skiving, etc., a shaping process, a prototyping process in which a respective particle foam component undergoes prototyping, a scanning process in which a respective particle foam component is scanned, etc.

The at least one secondary process for further processing a particle foam component can thus, be or comprise a chemical and/or physical connecting process in which the particle foam component is connected, e.g. by gluing, welding, particularly by ultrasonic-welding, screwing, clamping, etc. with at least one other component to form a component assembly, for instance. As indicated above, other secondary processes can comprise at least one of: machining processes, e.g. cutting processes, drilling processes, milling processes, skiving processes, or recycling processes, for instance. Also, secondary processes can comprise prototyping processes, one- or multidimensional scanning processes, etc. Hence, an apparatus for further processing a particle foam component can be configured to implement at least one of: chemical and/or physical connecting processes, e.g. gluing processes, screwing processes, clamping processes, welding processes, screwing processes, clamping processes, machining processes, e.g. cutting processes, drilling processes, milling processes, skiving processes, or recycling processes, for instance. Further, an apparatus for further processing a particle foam component can be configured to implement one or more prototyping processes, one- or multidimensional scanning processes, etc.

Alternatively or additionally, the data processing unit can receive one or more parameters of a particle foam component; the data processing unit can thus, receive parameters of at least one particle foam component or information specifying same, respectively. Respective parameters can be parameters of expandable or expanded polymer particles which are to be obtained through a respective primary process (target primary particle parameters), parameters or expandable or expanded polymer particles which are obtained through a respective primary process (current primary particle parameters), parameters of a particle foam component which is to be obtained through a respective primary process (target primary component parameters), or parameters of a particle foam component which has been obtained through a respective primary process (current primary component parameters), parameters of a particle foam component which is to be obtained through a respective secondary process (target secondary component parameters), or parameters of a particle foam component which has been obtained through a respective secondary process (current secondary component parameters), for instance.

Hence, in the first step of the method, the data processing unit can receive process-related information which relate to one or more parameters of at least one primary process in and/or to one or more parameters of at least one secondary process, and/or component-related information which relate to one or more target or current component parameters of at least one particle foam component.

A respective parameter data set can be received from sensors generating sensor information indicative of at least one parameter of at least one primary process and/or indicative of at least one parameter of at least one secondary process. Respective sensors can be provided with a respective apparatus for performing a respective primary process, e.g. comprising processing expandable or expanded polymer particles, particularly polyolefin particles, to form a particle foam component, and/or with a respective apparatus for performing a respective secondary process. In either case, respective sensors can be or comprise at least one of: acoustic sensors, optical sensors, such as laser sensors, electromagnetic sensors, chemical sensors, spectroscopic sensors, temperature sensors, pressure sensors, power sensors, humidity sensors, density sensors, hardness sensors, weight sensors, etc. Respective sensors can thus, particularly comprise acoustic and/or optical sensors, e.g. for determining properties, such as color, geometric properties, such as shape, surface properties, such as roughness, etc., of respective expandable or expanded polymer particles or of a respective particle foam component.

Any of the information to be received at the data processing unit can be communicated to the data processing unit with suitable data communication means, such as wired or wireless, data communication protocols or standards, for instance. As an example, internet communication protocols or standards, such as or including TCP, UDP, DCCP, OPC UA (OPC Unified Architecture), etc., can be implemented or used to provide a respective parameter data set to the data processing unit. As such, the data processing unit can be connected with at least one respective apparatus performing a respective primary process and/or with at least one apparatus performing a respective secondary process. As such, a respective apparatus performing a respective primary or a respective secondary process can comprise one or more data communication interfaces, e.g. in the shape of data communication ports, configured to transfer information, which is to be received at the data processing unit, to the data processing unit.

Any of the information to be received or received at the data processing unit can be communicated to the data processing unit with or without data encryption. Encryption can be useful when the information to be processed via the data processing unit includes confidential and/or proprietary information, e.g. know-how, e.g. of an operator of a respective apparatus for processing expandable or expanded polymer particles to form a particle foam component, for instance.

The data processing unit can generally be implemented in hardware- and/or software. The data processing unit can thus, be implemented as a computer or server comprising and/or using one or more algorithms for receiving and, as will be apparent from further below, processing a respective parameter data set. As an example, a respective data processing unit can be arranged in a computer-network. A respective data processing unit can thus, be or comprise a cloud-computer or a cloud-server, respectively which enables that the data processing unit can be remote to respective apparatuses performing a respective primary and/or secondary process.

The method comprises in a second step: evaluating, via the at least one data processing unit, the (received) parameter data set with respect to at least one evaluation criterion and generating an evaluation data set indicative of at least one current or future deviation of at least one parameter specified by the parameter data set with respect to the at least one evaluation criterion. The method thus, includes using the data processing unit for a deliberate evaluation of the parameter data set and the parameters specified therein, respectively with respect to at least one evaluation criterion to identify at least one current or future deviation of at least one parameter specified by the parameter data set with respect to the at least one evaluation criterion. The data processing unit is thus, provided with one or more algorithms configured to evaluate the parameter data set and the parameters specified therein, respectively with respect to at least one evaluation criterion to identify at least one current or future deviation of at least one parameter specified by the parameter data set with respect to the at least one evaluation criterion. Based on the evaluation of the parameter data set and the parameters specified therein, respectively with respect to at least one evaluation criterion, the data processing unit generates an evaluation data set indicative of at least one current or future deviation of at least one parameter specified by the parameter data set with respect to the at least one evaluation criterion. A respective evaluation data set thus, includes deviation information generated by the data processing unit which deviation information indicates at least one current or future deviation of at least one parameter specified by the parameter data set with respect to the at least one evaluation criterion. This is an essential difference relative to existing approaches in which respective parameters are manually set by operators and not further analyzed as specified further above with respect to the prior art underlying the present invention.

The method comprises in a third step: operating at least one (primary) apparatus for processing expandable or expanded polymer particles to form a particle foam component based on the evaluation data set. As such, the method includes using the evaluation data set for operating the or at least one (primary) apparatus for processing expandable or expanded polymer particles to form a particle foam component. Using the evaluation data set for operating the or at least one (primary) apparatus for processing expandable or expanded polymer particles to form a particle foam component can comprise, particularly automatically, performing current or future adjustments to one or more process parameters implemented by the at least one (primary) apparatus for processing expandable or expanded polymer particles. Performing current or future adjustments to one or more process parameters can be implemented in a control-loop which can facilitate an active control of the operation of the at least one (primary) apparatus for processing expandable or expanded polymer particles, e.g. by an active adjustment of one or more process parameters during current or future operation of the (primary) apparatus for processing expandable or expanded polymer particles. Performing current or future adjustments to one or more process parameters can compensate for current or future deviations of at least one parameter specified by the parameter data set with respect to the at least one evaluation criterion. Compensating for a respective current or future deviation will typically improve at least one of quality of the process implemented by the (primary) apparatus for processing expandable or expanded polymer particles to form a particle foam component and quality of the particle foam components obtainable or obtained with the apparatus. As such, operating the at least one (primary) apparatus for processing expandable or expanded polymer particles to form a particle foam component based on the evaluation data set can comprise, particularly at least semi-automatically, adjusting at least one process parameter of the process for processing expandable or expanded polymer particles to form a particle foam component implemented with the (primary) apparatus for processing expandable or expanded polymer particles. Respective adjustments can be effective to compensate for a respective current or future deviation as set forth above.

Hence, operating the at least one (primary) apparatus for processing expandable or expanded polymer particles based on the evaluation data set can comprise adjusting at least one parameter of the at least one primary process for processing expandable or expanded polymer particles, e.g. to form a particle foam component, which at least one parameter originally comprises or causes a current or future deviation with respect to the at least one evaluation criterion, such that the current or future deviation of the at least one parameter with respect to the at least one evaluation criterion is reduced at least to a certain degree. As the adjustment of the at least one parameter can be effected at least semi-automatically, e.g. under control of the data processing unit, a self-regulatory method of operating at least one (primary) apparatus for processing expandable or expanded polymer particles to form a particle foam component can be realized.

The invention thus, provides an improved method of operating at least one apparatus for processing expandable or expanded polymer particles, particularly polyolefin particles.

Exemplary embodiments of the method will be set forth in the following; one or more of the exemplary embodiments can be combined with each other.

According to an exemplary embodiment, the method further comprises communicating the evaluation data set to at least one (primary) apparatus for processing expandable or expanded polymer particles. As such, the data processing unit can directly or indirectly communicate with at least one (primary) apparatus for processing expandable or expanded polymer particles to transfer the evaluation data set to the at least one (primary) apparatus for processing expandable or expanded polymer particles. Communicating the evaluation data set to at least one (primary) apparatus for processing expandable or expanded polymer particles enables controlling operation of the at least one (primary) apparatus based on the information indicative of current or future deviation of at least one parameter specified by the parameter data set with respect to the at least one evaluation criterion. Communicating the evaluation data set to at least one (primary) apparatus for processing expandable or expanded polymer can be effected via respective communication protocols or standards, as specified above, for instance. As indicated above, data communication between the data processing unit and the at least one (primary) apparatus for processing expandable or expanded polymer particles can be effected via respective data communication interfaces and data communication protocols and standards, respectively.

According to another exemplary embodiment, the at least one evaluation criterion is or comprises at least one of: at least one reference parameter of a reference primary process for processing expandable or expanded polymer particles, at least one reference parameter of at least one reference secondary process for further processing a particle foam component, or at least one reference parameter of a reference particle foam component. Hence, evaluating the parameter data set with respect to at least one evaluation criterion and generating an evaluation data set indicative of at least one current or future deviation of at least one parameter specified by the parameter data set with respect to the at least one evaluation criterion can comprise comparing the parameter data set and the parameters specified therein with a respective reference parameter data set and parameters specified therein, particularly to determine current or future deviations.

As such, process parameters of a respective primary process can be evaluated with respect to a respective reference primary process. A respective evaluation can thus, comprise comparing process parameters of a respective primary process with reference process parameters of a respective reference primary process to determine current or future deviations. Further, process parameters of a respective secondary process can be evaluated with respect to a respective reference secondary process. A respective evaluation can thus, comprise comparing process parameters of a respective secondary process with reference process parameters of a respective reference secondary process to determine current or future deviations. Further, parameters of a respective particle foam component can be evaluated with respect to a respective reference particle foam component. A respective evaluation can thus, comprise comparing parameters of a particle foam component with reference parameters of a reference particle foam component to determine current or future deviations.

According to another exemplary embodiment of the invention, the parameter data set can specify at least one of the following parameters:
At least one chemical and/or physical process parameter e.g. atmosphere, temperature, pressure, radiation parameters, such as radiation power, radiation intensity, radiation wavelength, radiation frequency, voltage, speed, mold temperature, of at least one primary process for processing expandable or expanded polymer particles. Further, one or more of the following process parameters: cracking level, filling level, compression ratio, process-times, such as fusing time, cooling time, foam stabilization time, cycle time, amount and/or type of additive used, amount of water used, can be considered. Hence, one or more chemical and/or physical process parameters of at least one primary process for processing expandable or expanded polymer particles can be taken into consideration for the evaluation and evaluated with respect to the at least one evaluation criterion, respectively. A respective evaluation criterion can thus, comprise reference chemical and/or physical process parameters which are processed in at least one reference primary process.

At least one chemical and/or physical parameter e.g. atmosphere, acoustic properties, optical properties, e.g. color, color distribution, chemical composition, electrical properties, such as dielectric strength, resistivity, permittivity, susceptibility, thermal properties, pressure, temperature, humidity, density, hardness, weight, cell size, cell size distribution, cell morphology, cell morphology distribution, internal cell pressure, internal cell pressure distribution, of the expandable or expanded polymer particles which are processed in the at least one primary process. Hence, one or more chemical and/or physical parameters of the expandable or expanded polymer particles which are processed in the at least one primary process can be taken into consideration for the evaluation and evaluated with respect to the at least one evaluation criterion, respectively. A respective evaluation criterion can thus, comprise reference chemical and/or physical parameters of the expandable or expanded polymer particles which are processed in the at least one primary process.

At least one geometric parameter e.g. shape, e.g. bead- or ring-shape, size, surface structure, of the expandable or expanded polymer particles which are processed in the at least one primary process. Hence, one or more geometric parameters of the expandable or expanded polymer particles which are processed in the at least one primary process can be taken into consideration for the evaluation and evaluated with respect to the at least one evaluation criterion, respectively. A respective evaluation criterion can thus, comprise reference geometric parameters of the expandable or expanded polymer particles which are processed in at least one reference primary process.

At least one chemical and/or physical parameter e.g. acoustic properties, mechanical properties, chemical composition, color, color distribution, chemical composition, electrical properties, such as dielectric strength, resistivity, permittivity, susceptibility, pressure, temperature, humidity, density, hardness, weight, surface properties, e.g. roughness, external or internal voids, cell size, cell size distribution, cell morphology, cell morphology distribution, internal cell pressure, internal cell pressure distribution, fusion level, i.e. the level of inter-particle bonding within the particle foam component e.g. upon exposure to a heating source during the forming of the particle foam component, fire properties, shrinkage, warpage, acoustic properties, optical properties, e.g. translucence, emission behavior, water tightness, of the particle foam component which is formed or which is to be formed. Hence, one or more chemical and/or physical parameters of a particle foam component can be taken into consideration for the evaluation and evaluated with respect to the at least one evaluation criterion, respectively. A respective evaluation criterion can thus, comprise reference chemical and/or physical parameters of a particle foam component which is formed or which is to be formed.

At least one geometric parameter e.g. shape, size, surface structure, e.g. roughness, of the particle foam component which is formed of which is to be formed. Hence, one or more geometric parameters of a particle foam component can be taken into consideration for the evaluation and evaluated with respect to the at least one evaluation criterion, respectively. A respective evaluation criterion can thus, comprise reference geometric parameters of a particle foam component which is formed or which is to be formed.

At least one chemical and/or physical process parameter e.g. atmosphere, temperature, pressure, process time, of at least one secondary process. Hence, one or more chemical and/or physical process parameters of at least one secondary process can be taken into consideration for the evaluation and evaluated with respect to the at least one evaluation criterion, respectively. A respective evaluation criterion can thus, comprise reference chemical and/or physical process parameters of at least one reference secondary process.

At least one chemical and/or physical parameter e.g. acoustic properties, mechanical properties, chemical composition, color, color distribution, chemical composition, electrical properties, such as dielectric strength, resistivity, permittivity, susceptibility, pressure, temperature, humidity, density, hardness, weight, surface properties, e.g. roughness, external or internal voids, cell size, cell size distribution, cell morphology, cell morphology distribution, internal cell pressure, internal cell pressure distribution, fusion level, fire properties, shrinkage, warpage, acoustic properties, optical properties, e.g. translucence, emission behavior, water tightness, etc. of the particle foam component which is further processed in the at least one secondary process. Hence, one or more chemical and/or physical parameters of a particle foam component which is further processed in the at least one secondary process can be taken into consideration for the evaluation and evaluated with respect to the at least one evaluation criterion, respectively. A respective evaluation criterion can thus, comprise reference chemical and/or physical parameters of the particle foam component which is further processed in at least one reference secondary process.

At least one geometric parameter, e.g. shape, size, surface structure, of the particle foam component which is further processed in the at least one secondary process. Hence, one or more geometric parameters of a particle foam component which is further processed in the at least one secondary process can be taken into consideration for the evaluation and evaluated with respect to the at least one evaluation criterion, respectively. A respective evaluation criterion can thus, comprise reference geometric parameters of the particle foam component which is further processed in the at least one secondary process.

At least one connection parameter e.g. a connection force or strength, and/or fitting parameter, e.g. a fitting force or strength, of the particle foam component which is further processed in the at least one secondary process. Hence, one or more connection parameters, which might generally include mechanical characteristics, such as yield strength, flexural strength, etc., can be taken into consideration for the evaluation and evaluated with respect to the at least one evaluation criterion, respectively. A respective evaluation criterion can thus, comprise reference connection parameters of the particle foam component which is further processed in the at least one secondary process.

In either case, the parameter data set may specify multiple process parameters which may reflect a "process parameter matrix" or a "process window" of the respective primary or secondary process. A respective process parameter matrix or process window of a primary process can refer to at least one specific process parameter range, such as a temperature range, pressure range, for instance. A respective process parameter matrix or process window can refer to dependencies between two different process parameters, such as dependencies of process temperature vs. process pressure as applied in a respective primary and/or secondary process, for instance. Also, dependencies of one or more process parameters over time and/or location, e.g. within a mold or mold cavity, can be considered.

According to another exemplary embodiment, the at least one evaluation criterion is or refers to a quality criterion and/or an efficiency criterion of the at least one primary process or to a quality criterion of the expandable or expanded polymer particles or the particle foam component obtained through the at least one primary process. As such, the parameter data set and the parameters specified therein, respectively can be evaluated with respect to a quality criterion and/or an efficiency criterion of the at least one primary process or to a quality criterion of the expandable or expanded polymer particles or the particle foam component obtained through the at least one primary process. This also means that the evaluation data can be indicative of at least one current or future deviation of at least one parameter specified by the parameter data set with respect to the at least one quality criterion and/or with respect to the at least one efficiency criterion of the at least one primary process and/or with respect to the at least one quality criterion of the expandable or expanded polymer particles and/or of a particle foam component obtained through the at least one primary process.

Alternatively or additionally, the at least one evaluation criterion can be or can refer to a quality criterion and/or an efficiency criterion of the at least one secondary process. As such, quality and/or efficiency of respective primary and/or secondary processes can be evaluated and used at least for operating of the or a primary apparatus for processing expandable or expanded polymer particles, e.g. to perform adjustments to one or more process parameters, e.g. temperature, pressure, etc., so as to compensate for or reduce current deviations of process quality and/or process efficiency and/or to avoid or reduce future deviations of process quality and/or process efficiency. A respective quality criterion typically aims at a desired quality, which can be a specific threshold quality or a maximum quality. Likewise, a respective efficiency criterion typically aims at a desired efficiency, which can be a specific threshold efficiency or a maximum efficiency.

According to another exemplary embodiment, the at least one evaluation criterion is or refers to an energy consumption criterion, e.g. indicative of a carbon footprint, of the at least one primary process or expandable or expanded polymer particles or a particle foam component obtained through the at least one primary process. As such, the parameter data set and the parameters specified therein, respectively can be evaluated with respect to an energy consumption criterion. This also means that the evaluation data can be indicative of at least one current or future deviation of at least one parameter specified by the parameter data set with respect to at least one energy consumption criterion.

Alternatively or additionally, the at least one evaluation criterion can be or can refer to an energy consumption criterion of the at least one secondary process. As such, energy consumption of respective primary and/or secondary processes can be evaluated and used at least for operating of the or a primary apparatus for processing expandable or expanded polymer particles e.g. to perform adjustments to one or more process parameters, e.g. temperature, pressure, etc., so as to compensate for or reduce current deviations of energy consumption and/or to avoid or reduce future deviations of energy consumption. A respective energy consumption criterion typically aims at a desired energy consumption, which can be a specific threshold energy consumption or a minimum energy consumption.

According to another exemplary embodiment, the at least one data processing unit implements algorithms, particularly machine learning algorithms, more particularly neuronal networks, for evaluating the received parameter data set and for generating the evaluation data set. Respective algorithms can be highly efficient with respect to the evaluation of the parameter data set and the parameters specified therein, respectively and thus, the use of respective algorithms has a technical effect on improving operation of the or a respective primary apparatus. Likewise, the use of respective algorithms has a technical effect on improved control of operation of the or a respective primary apparatus. Improving operation or control of operation of the or a primary apparatus typically also improves the quality of the expandable or expanded polymer particles or the particle foam component manufactured in accordance with the primary process implemented by the respective primary apparatus.

According to another exemplary embodiment, the at least one data processing unit implements algorithms, particularly machine learning algorithms, for linking at least one parameter of the at least one primary with a specific process outcome, particularly a specific process quality, of the at least one primary process. Linking at least one parameter of the at least one primary process with a specific process outcome, particularly a specific process quality, of the at least one primary process enables an improved analyzing and evaluating of the operation of the primary process because the data processing unit can predict respective outcomes of the respective primary process on the basis of respective parameters. This can significantly improve the quality of the or a primary process e.g. because undesired outcomes can be (predictively) identified and avoided. As such, the use of respective algorithms has a technical effect on improving operation of the or a primary apparatus for processing expandable or expanded polymer particles which will typically, also have an effect of the quality of the expandable or expanded polymer particles or the particle foam component obtained through the primary process.

Alternatively or additionally, the at least one data processing unit can implement algorithms, particularly machine learning algorithms, for linking at least one parameter of at least one secondary process with a specific process outcome, particularly a specific process quality, of the at least one secondary process. Linking at least one parameter of the at least one secondary process with a specific process outcome, particularly a specific process quality, of at least one primary process and/or of at least one secondary process enables an improved analyzing and evaluating operation of the primary and/or secondary process because the data processing unit can predict respective outcomes of respective primary and/or secondary processes on the basis of respective parameters. This can significantly improve the quality of the primary and/or secondary process e.g. because undesired outcomes can be (predictively) identified and avoided. As such, the use of respective algorithms has a technical effect on improving operation of the or a primary apparatus for processing expandable or expanded polymer particles and/or of the or a secondary apparatus for further processing a particle foam component which will typically, also have an effect of the quality of the particle foam component further processed in accordance with the secondary process.

According to another exemplary embodiment, the at least one data processing unit implements algorithms, particularly machine learning algorithms, particularly neuronal networks, for defining the at least one evaluation criterion. As such, also the at least one evaluation criterion can be defined via the data processing unit and via respective algorithms, respectively which enables automatically generating a one- or multidimensional evaluation matrix for a specific primary and/or secondary process and/or a one- or multidimensional evaluation matrix for specific expandable or expanded polymer particles or for a specific particle foam component which is to be obtained through a primary process and/or which is to be further processed in a respective secondary process. As an example, a respective algorithm can take into account one or more component target properties, such as shape, dimensions, weight, etc., of a particle foam component and uses these component target properties to define the at least one evaluation criterion due to knowledge about relationship between respective component target properties and process parameters, for instance. As an example, the algorithm can use information specifying that specific component target properties of a particle foam component can only be achieved with specific process parameters. The algorithm thus, knows a relationship between specific component target properties and related process parameters, and vice versa. This information on respective component target properties can the then be used for defining at least one evaluation criterion which, when applied, enables that the specific target properties can be achieved because the parameters received at the data processing unit are evaluated against the evaluation criterion and, based on the evaluation data set obtained therethrough, operation of the at least one primary apparatus for processing expandable or expanded polymer particles, can be controlled, e.g. via adjustments of one or more process parameters to achieve the process parameters which will lead to the specific component target properties of the particle foam component.

According to another exemplary embodiment, the at least one data processing unit implements machine learning algorithms, particularly neuronal networks, for modifying the at least one at least one evaluation criterion to receive a modified evaluation criterion. As such, respective algorithms can also be used to modify at least one evaluation criterion, e.g. to achieve a respective process quality, process efficiency, process energy consumption, or respective component target properties of a particle foam component. As an example, a quality criterion can be modified when a higher efficiency of the primary process is desired which can mean that a respective primary apparatus for processing expandable or expanded polymer particles to form a particle foam component can be operated with different process parameters, such as a shortened fusing time, for instance which increases the efficiency of the process but might decrease the quality of the particle foam component, e.g. due to voids, surface errors, lower fusion level, etc., which might not be important for the respective particle foam component given the desired efficiency. Likewise, an efficiency criterion could be modified when a higher quality of the particle foam component is desired which means that a respective primary apparatus for processing expandable or expanded polymer particles to form a particle foam component can be operated with different process parameters, such as an extended fusing time, for instance which increases the quality of the particle foam component, e.g. due to a reduction of voids, surface errors, higher fusion level, etc., but might decrease the efficiency of the process which might not be important for the respective process given the desired quality .

According to another exemplary embodiment, the method can comprise a step of correlating at least one currently implemented parameter specified by the parameter data set with at least one other parameter to receive a parameter set to generate a correlated parameter data set which includes the at least one currently implemented parameter and the at least one other parameter. The method may then further comprise a step of operating the at least one primary apparatus for processing the expandable or expanded polymer particles based on the correlated parameter data set. Operating the at least one primary apparatus for processing the expandable or expanded polymer particles based on the correlated parameter data set can particularly result in an improved quality of the at least one primary process for processing expandable or expanded polymer particles or in an improved quality of the expandable or expanded polymer particles and/or of the particle foam component obtained through the at least one primary process. As an example, a respective currently implemented parameter specified by the parameter data set could be a fusing temperature and/or a fusing time. The fusing temperature and/or fusing time and/or fusion level could be correlated with a specific steam pressure to generate a correlated parameter data set which includes the fusing temperature and/or a fusing time and the steam pressure. When the primary apparatus is operated on basis of the correlated parameter data set, i.e. the primary apparatus implements the fusing temperature and/or fusing time and the correlated steam pressure, an improved quality of the particle foam component can be achieved relative to operating the primary apparatus not on basis of the correlated parameter data set. A respective correlation of currently implemented parameters with other parameters, can be effected through the use of a look-up table, for instance which is stored in the data processing unit or which can be accessed via the data processing unit. A respective look-up table can include correlated couples of parameters which will, when implemented during operation of the primary apparatus, result in a specific process quality, process efficiency, or component quality, for instance. Of course, this principle can also be implemented for operating multiple primary apparatuses of the same or different configuration/functionality.

According to another exemplary embodiment of the method, the method can comprise the steps of: receiving, at the at least one data processing unit, a parameter data set specifying at least one parameter of at least one secondary process for further processing a particle foam component; evaluating, via the at least one data processing unit, the parameter data set with respect to at least one evaluation criterion and generating an evaluation data set indicative of at least one current or future deviation of at least one parameter specified by the parameter data set with respect to the at least one evaluation criterion; communicating the evaluation data set to the at least one primary apparatus for processing expandable or expanded polymer particles (optionally); and operating the at least one primary apparatus for processing expandable or expanded polymer particles based on the evaluation data set. As such, evaluation information concerning a respective secondary process can be used for controlling operation of a respective primary process. In such a manner, possible deficiencies of a particle foam component which show up in a respective secondary process can be used for controlling operation of a respective primary process, for instance.

A respective control of operation of the respective primary process will typically, comprise adjusting at least one of: at least one process parameter of the or a primary process for processing expandable or expanded polymer particles, e.g. to form a particle foam component, and at least one parameter of a particle foam component which is formed or which is to be formed to compensate for the possible deficiencies of a particle foam component which show up in a respective secondary process. As an example, fusing parameters influencing the surface properties or surface quality of a particle foam component can be adjusted in a primary process when a secondary process shows that the surface properties or surface quality of a particle foam component is not suitable, e.g. with respect to a welding process, etc.

A second aspect of the invention relates to a system, comprising at least one data processing unit and at least one (primary) apparatus for performing a primary process for processing expandable or expanded polymer particles, e.g. to form a particle foam component. The system is configured to implement a method of operating at least one (primary) apparatus for processing expandable or expanded polymer particles to form a particle foam component in accordance with the method of the first aspect of the invention. As such, the system is particularly configured to: receive, at at least one data processing unit, a parameter data set specifying at least one of: at least one parameter of at least one primary process for processing expandable or expanded polymer particles, e.g. to form a particle foam component, at least one parameter of at least one secondary process for processing a particle foam component, or at least one parameter of a particle foam component; evaluate, via the at least one data processing unit, the parameter data set with respect to at least one evaluation criterion and generating an evaluation data set indicative of at least one current or future deviation of at least one parameter specified by the parameter data set with respect to the at least one evaluation criterion; and operate at least one apparatus for processing expandable or expanded polymer particles to form a particle foam component, based on the evaluation data set.

A respective primary apparatus for performing a pre-treatment of expandable or expanded polymer particles can comprise at least one pre-treatment chamber in which a pre-treatment of respective expandable or expanded polymer particles can be effected. A respective pre-treatment chamber can be or comprise an oven, a pressure tank, etc. Further, the apparatus can comprise one or more sensors configured to generate sensor values indicative of at least one parameter of at least one primary process for processing expandable or expanded polymer particles to perform a pre-treatment. Respective sensor values can be combined in a respective parameter data set which can be transferred to the data processing unit for evaluation purposes as specified in context with the method of the first aspect of the invention.

A respective primary apparatus for processing expandable or expanded polymer particles to form a particle foam component can comprise a mold device comprising at least one mold delimiting at least one mold cavity. Further, the apparatus can comprise a fusing device configured to fuse expandable or expanded polymer particles to form a particle foam component within the at least one mold cavity. A respective fusing device can be configured to apply thermal energy, e.g. via electromagnetic radiation, such as IR-radiation, RF-radiation, etc., or via heated fluids, such as gas, steam, etc., to expandable or expanded polymer particles within the at least one mold cavity which causes the expandable or expanded polymer particles to fuse together thereby, forming at least one particle foam component. Further, the apparatus can comprise one or more sensors configured to generate sensor values indicative of at least one parameter of at least one primary process for processing expandable or expanded polymer particles to form a particle foam component. Respective sensor values can be combined in a respective parameter data set which can be transferred to the data processing unit for evaluation purposes as specified in context with the method of the first aspect of the invention.

A respective primary apparatus for performing a post-treatment of at least one particle foam component can comprise at least one post-treatment chamber in which a post-treatment of at least one particle foam component can be effected. A respective post-treatment chamber can be or comprise an oven, a pressure tank, etc. Further, the apparatus can comprise one or more sensors configured to generate sensor values indicative of at least one parameter of at least one primary process for processing expandable or expanded polymer particles to perform a post-treatment. Respective sensor values can be combined in a respective parameter data set which can be transferred to the data processing unit for evaluation purposes as specified in context with the method of the first aspect of the invention.

In addition to the at least one data processing unit and the at least one apparatus for processing expandable or expanded polymer particles, the system can also comprise at least one secondary apparatus for further processing a particle foam component, e.g. to connect the particle foam component, e.g. by welding, with another component to form a component assembly.

The aforementioned components of the system, i.e. particularly the data processing unit and the respective apparatuses for performing respective primary and/or secondary processes, can communicate with each other through a data communication network, such as an intranet or the internet. A respective data communication network can implement wired or wireless data communication protocols or standards. As an example, internet communication protocols or standards, such as or including TCP, UDP, DCCP, OPC UA, etc., can be used to provide a respective parameter data set to the data processing unit.

All annotations concerning the method of the first aspect of the invention also apply to the system of the second aspect of the invention and vice versa.

The disclosure will also be readily understood by the following description of exemplary embodiments in conjunction with the accompanying drawings in which:
Fig.1 illustrates a principle drawing of a system in accordance with an exemplary embodiment; and
Fig. 2 illustrates a flow diagram of a method in accordance with an exemplary embodiment.

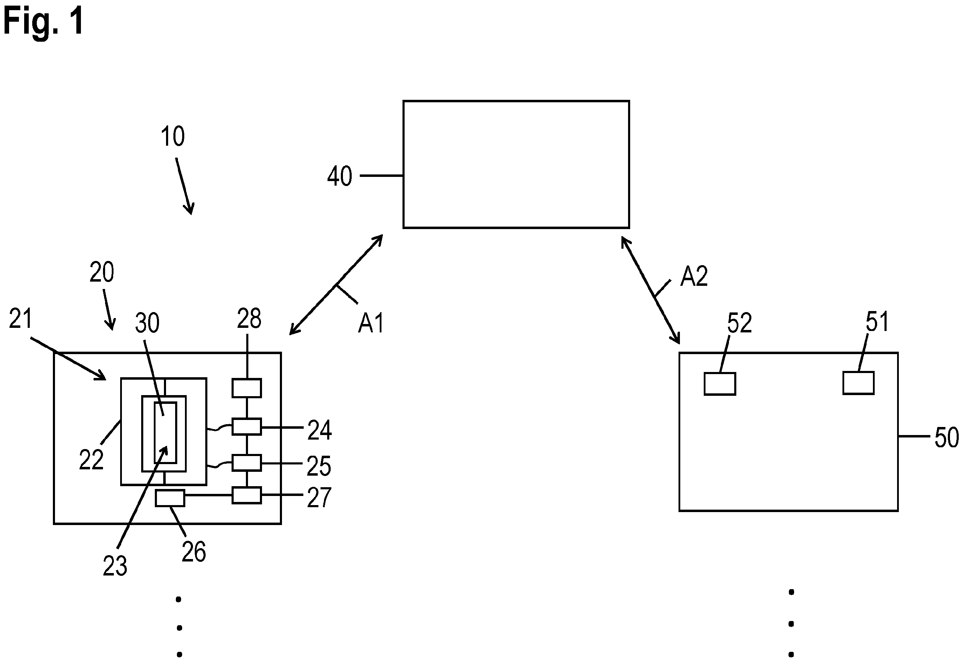

Fig.1 illustrates a principle drawing of a system 10 in accordance with an exemplary embodiment. The system 10 comprises at least one apparatus 20 for processing expandable or expanded polymer particles, particularly expandable or expanded polyolefin particles, to form a particle foam component 30. The apparatus 20 comprises a mold device 21 comprising at least one mold 22 delimiting at mold cavity 23. Further, the apparatus 20 can comprise a filling device 24 for filling the mold cavity 23 with expandable or expanded polymer particles to be processed by the apparatus 20 to form a particle foam component 30. The apparatus 20 can further comprise a fusing device 25 configured to fuse expandable or expanded polymer particles to form a particle foam component 30 within the mold cavity 23. A respective fusing device 25 can be configured to apply thermal energy, e.g. via electromagnetic radiation, such as IR-radiation, RF-radiation, etc., or via heated fluids, such as gas, steam, etc., to expandable or expanded polymer particles within the mold cavity 23 which causes the expandable or expanded polymer particles to fuse together thereby, forming a particle foam component 30. Further, the apparatus 20 can comprise one or more sensors 26 configured to generate sensor values indicative of at least one parameter of a process for processing expandable or expanded polymer particles to form a particle foam component 30 performed by the apparatus 20. Respective sensor values can be combined in a respective parameter data set which can be transferred to a data processing unit 40 for evaluation purposes as will be specified further below. The apparatus 20 can further comprise a controller 27 for controlling operation of the apparatus 20. The apparatus 20 can further comprise a data communication interface 28 for communicating data, such as a respective parameter data set, to the data processing unit 40. The apparatus 20 will be referred to as primary apparatus in the following. Accordingly, the processes implemented by the primary apparatus 20 will be referred to as primary processes in the following. As indicated by the dots below the primary apparatus 20, the system 10 can comprise a plurality of respective primary apparatuses 20.

The or a further primary apparatus 20 could also be configured as a pre-treatment apparatus, i.e. an apparatus which is configured to perform at least one chemical and/or physical pre-treatment process to obtain pre-treated expandable or expanded polymer particles which can be fused together. A respective primary apparatus 20 can e.g. comprise a pre-treatment oven or tank, respectively.

The or a further primary apparatus 20 could also be configured as a post-treatment apparatus, i.e. an apparatus which is configured to perform at least one chemical and/or physical post-treatment process to obtain a post-treated particle foam component 30. A respective primary apparatus 20 can e.g. comprise a post-treatment oven or tank, respectively.

The system 10 can further comprise an apparatus 50 for further processing of a particle foam component 30, such as a particle foam component 30 formed by the or at least one primary apparatus 20. The apparatus 50 is configured to implement at least one process for further processing a particle foam component 30. The apparatus 50 can further comprise a controller for controlling operation of the apparatus 50. The apparatus 50 can further comprise a data communication interface 52 for communicating data, such as a respective parameter data set, to the data processing unit 40. The apparatus 50 will be referred to as secondary apparatus in the following. The processes implemented by the secondary apparatus 50 will be referred to as secondary processes in the following. Accordingly, respective secondary process can comprise post-processing of the or a particle foam component 30, providing the or a particle foam component 30 with additional constructive and/or functional features, connecting the or a particle foam component 30 with at least one other component to form a component assembly, for instance. As a concrete example, a respective secondary process can comprise a welding process, particularly an ultrasonic-welding process, in which the or a particle foam component 30 is welded to another component to form a component assembly. As indicated by the dots below the secondary apparatus 50, the system 10 can comprise a plurality of respective secondary apparatuses 50.

As indicated above, the system 10 further comprises the data processing unit 40 which is communicatively connected with the primary apparatus 20 and/or with the secondary apparatus 50 via respective data connections indicated by double-arrows A1, A2,

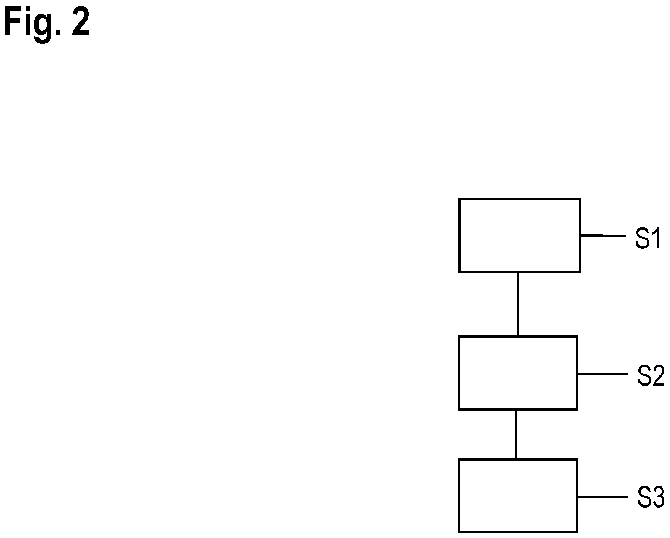

The system 10 is configured to implement a method of operating at least the primary apparatus 20 in accordance with an exemplary embodiment which will be specified in the following (also referring to Fig. 2):
The method generally facilitates operating at least one primary apparatus 20. Operating the at least one primary apparatus 20 typically, comprises controlling operation of the at least one primary apparatus 20. Controlling of the at least one primary apparatus 20 can comprise adjusting one or more parameters to influence processing of the expandable or expanded polymer particles, particularly to obtain an increased quality of the primary process which can also result in obtaining an increased quality of the expandable or expanded particles or the particle foam components 30 resulting therefrom.

The method thus, generally implements steps for processing expandable or expanded polymer particles, e.g. to form at least one particle foam component 30, via at least one primary apparatus 20. Respective steps for forming a particle foam component 30 can be or comprise at least one of: filling the mold cavity 23 of a mold 22 of a mold device 21 of a respective primary apparatus 20 with expandable or expanded polymer particles, fusing the expandable or expanded polymer particles within the mold cavity 23 to form at least one particle foam component 30, and removing the at least one particle foam component 30 from the mold cavity 23. Fusing of the expandable or expanded polymer particles within the mold cavity 23 can comprise applying thermal energy, e.g. via electromagnetic radiation, such as IR-radiation, RF-radiation, etc., or via heated fluids, such as gas, steam, etc., to the expandable or expanded polymer particles which causes the expandable or expanded polymer particles to fuse together thereby, forming at least one particle foam component 30.

In case that the or a primary apparatus 20 is configured for performing a pre-treatment process (even though not explicitly shown in the Fig.), a respective primary process for pre-treatment expandable or expanded polymer particles can comprise a chemical and/or physical pre-treatment of respective expandable or expanded polymer particles to obtain, pre-treated expandable or expanded polymer particles which can be fused together to form a particle foam component. A respective chemical and/or physical pre-treatment can comprise setting out particles under specific chemical and/or physical conditions, such as a specific chemical and/or physical atmosphere, temperature, pressure, humidity, etc., and/or treating particles with at least one specific chemical and/or physical pre-treatment agent, such as a chemical and/or physical blowing agent, for instance. As an example, a respective pre-treatment can comprise setting out particles in a specific chemical atmosphere under high pressure and/or temperature which enables that a chemical and/or physical blowing agent can be absorbed with respective particles, e.g. via diffusion processes. As another example, a respective pre-treatment can comprise wetting particles with an activator agent, particularly a chemical activator agent, and subsequent drying of the particles; respective particles could then be fused together in a so-called Atecarma-process. As such, combinations of different pre-treatment processes are conceivable.

In case that the or a primary apparatus 20 is configured for performing a post-treatment process (even though not explicitly shown in the Fig.), a respective post-treatment process for post-treatment of at least one particle foam component can comprise a chemical and/or physical post-treatment of a respective particle foam component to obtain at least one post-treated particle foam component. A respective chemical and/or physical post-treatment can comprise setting out at least one particle foam component under specific chemical and/or physical conditions, such as a specific chemical and/or physical atmosphere, temperature, pressure, humidity, etc., and/or treating at least one particle foam component with at least one specific chemical and/or physical post-treatment agent. As an example, a respective post-treatment can comprise setting out at least one particle foam component in a specific chemical atmosphere under high pressure and/or temperature which enables that a chemical and/or physical blowing agent can be removed. As another example, a respective post-treatment can comprise setting out at least one particle foam component in a specific chemical and/or physical atmosphere to assure desired dimensions of the particle foam component.

The method comprises in a first step S1 (see Fig. 2): receiving, at the data processing unit 40, a parameter data set specifying at least one of: at least one parameter of at least one primary process, at least one parameter of at least one secondary process, or at least one parameter of a particle foam component 30 which has been formed or which is to be formed. Hence, the first step of the method comprises receiving a parameter data set indicative of at least one parameter of at least one primary process, at least one parameter of at least one secondary process, or at least one parameter of a particle foam component 30 which has been formed or which is to be formed. The data processing unit 40 can thus, receive one or more parameters of at least one primary process; respective parameters can be process parameters of at least one primary process or information specifying same, respectively. Respective process parameters can be deemed as primary process parameters because they relate to a primary process in which expandable or expanded polymer particles are processed e.g. to form at least one particle foam component 30.

The at least one primary process can thus, be or comprise a convective or non-convective process in which expandable or expanded polymer particles are fused together to form a particle foam component 30. As an example, the at least one primary process can comprise at least one of: chemical or exothermic molding, steam-chest molding, in-mold foaming of expandable gas-loaded polymer particles, convection molding, wave-molding, RF-molding, for instance. As such, the at least one primary process could be a so-called Atecarma-molding process. Hence, a primary apparatus 20 can be configured to implement at least one of chemical or exothermic molding, steam-chest molding, in-mold foaming, convection molding, wave-molding, RF-molding, so-called Atecarma-molding, for instance.

Alternatively or additionally, the data processing unit 40 can receive one or more parameters of at least one secondary process; the data processing unit 40 can thus, receive process parameters of at least one secondary process. Respective process parameters can be deemed as secondary process parameters because they relate to a secondary process in which at least one particle foam component 30 which has been formed in the or a primary process is further processed. A respective secondary process can comprise post-processing of the particle foam component 30, providing the particle foam component 30 with additional constructive and/or functional features, connecting the particle foam component 30 with at least one other component to form a component assembly, for instance. As a concrete example, a respective secondary process can comprise a welding process, particularly an ultrasonic-welding process, in which a respective particle foam component 30 is welded to another component to form a component assembly.

The at least one secondary process can be or comprise a connecting process in which the particle foam component 30 is chemically and/or physically connected, e.g. by gluing, screwing, clamping, welding, particularly by ultrasonic-welding, with at least one other component to form a component assembly. Other secondary processes can comprise at least one of: machining processes, e.g. cutting processes, drilling processes, skiving processes, prototyping processes, scanning processes, or recycling processes, for instance. Hence, a secondary apparatus 50 can be configured to implement at least one of: a chemical and/or physical connecting process, a machining process, a prototyping process, a scanning process, or a recycling process, for instance.

Alternatively or additionally, the data processing unit 40 can receive one or more parameters of a particle foam component 30; the data processing unit 40 can thus, receive parameters of at least one particle foam component 30 or information specifying same, respectively. Respective parameters can be parameters of expandable or expanded polymer particles which are to be obtained through a respective primary process (target primary particle parameters), parameters or expandable or expanded polymer particles which are obtained through a respective primary process (current primary particle parameters), parameters of a particle foam component 30 which is to be obtained through a respective primary process (target primary component parameters), or parameters of a particle foam component 30 which has been obtained through a respective primary process (current primary component parameters), parameters of a particle foam component 30 which is to be obtained through a respective secondary process (target secondary component parameters), or parameters of a particle foam component 30 which has been obtained through a respective secondary process (current secondary component parameters), for instance.

Hence, in the first step S1 of the method, the data processing unit 40 can receive process-related information which relate to one or more parameters of primary process and/or to one or more parameters of a secondary process in which at least one particle foam component 30 which has been formed in the or a primary process is further processed, and/or component-related information which relate to one or more target or current component parameters of at least one particle foam component 30.

A respective parameter data set can be received from sensors 26 of the or a primary apparatus 20 generating sensor values indicative of at least one parameter of at least one primary process and/or received from sensors 51 of the or a secondary apparatus 50 generating sensor values indicative of at least one parameter of at least one secondary process. Respective sensors 26, 51 can thus, be provided with a respective primary apparatus 20 and/or with a respective secondary apparatus 50. In either case, respective sensors 26, 51 can be or comprise at least one of: acoustic sensors, optical sensors, such as laser sensors, electromagnetic sensors, chemical sensors, spectroscopic sensors, temperature sensors, pressure sensors, power sensors, humidity sensors, density sensors, hardness sensors, weight sensors, etc. Respective sensors 26, 51 can particularly comprise acoustic and/or optical sensors, such as laser sensors,, e.g. for determining properties, such as geometric properties, such as shape, surface properties, etc., of a particle foam component 30 e.g. which is to be formed or which has been formed in a respective primary process or of a particle foam component 30 which is to be further processed or which has been further processed in a respective secondary process.

Any of the information to be received at the data processing unit 40 can be communicated to the data processing unit 40 with suitable data communication means, such as wired or wireless, data communication protocols or standards. As an example, internet communication protocols or standards, such as or including TCP, UDP, DCCP, OPC UA, etc., can be used to provide a respective parameter data set to the data processing unit 40. As such, the data processing unit 40 can be connected with at least one primary and/or secondary apparatus 20, 50. As such, a respective primary and/or second apparatus 20, 50 can comprise data communication interfaces 28, 52, e.g. in the shape of data communication ports, configured to transfer information, which is to be received at the data processing unit 40, to the data processing unit 40.

Any of the information to be received or received at the data processing unit 40 can be communicated to the data processing unit 40 with or without data encryption. Encryption can be useful when the information to be processed via the data processing unit 40 includes confidential and/or proprietary information, e.g. know-how, e.g. of an operator of a respective primary and/or secondary apparatus 20, 50, for instance.

The data processing unit 40 can generally be implemented in hardware- and/or software. The data processing unit 40 can thus, be implemented as a computer or server comprising and/or using one or more algorithms for receiving and, as will be apparent from further below, processing a respective parameter data set. As an example, the data processing unit can 40 be arranged in a computer-network. The data processing unit 40 can thus, be or comprise a cloud-computer or a cloud-server, respectively which enables that the data processing unit 40 can be remote to respective primary and/or secondary apparatuses 20, 50.

The method comprises in a second step S2 (see Fig. 2): evaluating, via the data processing unit 40, the (received) parameter data set with respect to at least one evaluation criterion and generating an evaluation data set indicative of at least one current or future deviation of at least one parameter specified by the parameter data set with respect to the at least one evaluation criterion. The method thus, includes using the data processing unit 40 for a deliberate evaluation of the parameter data set and the parameters specified therein, respectively with respect to at least one evaluation criterion to identify at least one current or future deviation of at least one parameter specified by the parameter data set with respect to the at least one evaluation criterion. The data processing unit 40 is thus, provided with one or more algorithms configured to evaluate the parameter data set and the parameters specified therein, respectively with respect to at least one evaluation criterion to identify at least one current or future deviation of at least one parameter specified by the parameter data set with respect to the at least one evaluation criterion. Based on the evaluation of the parameter data set and the parameters specified therein, respectively with respect to at least one evaluation criterion, the data processing unit 40 generates an evaluation data set indicative of at least one current or future deviation of at least one parameter specified by the parameter data set with respect to the at least one evaluation criterion. A respective evaluation data set thus, includes deviation information generated by the data processing unit 40 which deviation information indicates at least one current or future deviation of at least one parameter specified by the parameter data set with respect to the at least one evaluation criterion.

The method comprises in a third step S3 (see Fig. 3): operating at least one primary apparatus 20 based on the evaluation data set. As such, the method includes using the evaluation data set for operating the or at least one primary apparatus 20.

Using the evaluation data set for operating the or at least one primary apparatus 20 can e.g. comprise, particularly automatically, performing current or future adjustments to one or more process parameters. Performing current or future adjustments to one or more process parameters can be implemented in a control-loop which can facilitate an active control of the operation of the at least one primary apparatus 20, e.g. by an active adjustment of one or more process parameters during current or future operation of the primary apparatus 20. Performing current or future adjustments to one or more process parameters can compensate for current or future deviations of at least one parameter specified by the parameter data set with respect to the at least one evaluation criterion. Compensating for a respective current or future deviation will typically improve at least one of quality of the primary process implemented by the primary apparatus 20 and quality of the components obtainable or obtained with the primary apparatus 20. As such, operating the at least one primary apparatus 20 based on the evaluation data set can comprise, particularly at least semi-automatically, adjusting at least one process parameter of the process for processing expandable or expanded polymer particles to form a particle foam component 30 implemented with the primary apparatus 20. Respective adjustments can be effective to compensate for a respective current or future deviation as set forth above.

Hence, operating the at least one primary apparatus 20 based on the evaluation data set can comprise adjusting at least one parameter of the at least one primary process, which at least one parameter originally comprises or causes a current or future deviation with respect to the at least one evaluation criterion, such that the current or future deviation of the at least one parameter with respect to the at least one evaluation criterion is reduced at least to a certain degree. As the adjustment of the at least one parameter can be effected at least semi-automatically, e.g. under control of the data processing unit 40, a self-regulatory method of operating at least one primary apparatus 20 can be realized.

As is apparent from above, the method can further comprise communicating the evaluation data set to at least one primary apparatus 20. As such, the data processing unit 40 can directly or indirectly communicate with at least one primary apparatus 20 to transfer the evaluation data set to the primary apparatus 20.

Communicating the evaluation data set to the at least one primary apparatus 20 enables controlling operation of the primary apparatus 20 based on the information indicative of current or future deviation of at least one parameter specified by the parameter data set with respect to the at least one evaluation criterion. Communicating the evaluation data set to at least one primary apparatus 20 can be effected via respective communication protocols or standards, as specified above, for instance. As indicated above, data communication between the data processing unit 40 and the or at least one primary apparatus 20 can be effected via respective data communication interfaces and data communication protocols and standards, respectively.

The at least one evaluation criterion can be or comprise at least one of: at least one reference parameter of a reference primary process for processing expandable or expanded polymer particles, at least one reference parameter of at least one reference secondary process for further processing a particle foam component, or at least one reference parameter of a reference particle foam component. Hence, evaluating the parameter data set with respect to at least one evaluation criterion and generating an evaluation data set indicative of at least one current or future deviation of at least one parameter specified by the parameter data set with respect to the at least one evaluation criterion can comprise comparing the parameter data set and the parameters specified therein with a respective reference parameter, particularly to determine current or future deviations.

As such, process parameters of a respective primary process can be evaluated with respect to a respective reference primary process. A respective evaluation can thus, comprise comparing process parameters of a respective primary process with reference process parameters of a respective reference primary process to determine current or future deviations. Further, process parameters of a respective secondary process can be evaluated with respect to a respective reference secondary process. A respective evaluation can thus, comprise comparing process parameters of a respective secondary process with reference process parameters of a respective reference secondary process to determine current or future deviations. Further, parameters of a respective particle foam component 30 can be evaluated with respect to a respective reference particle foam component 30. A respective evaluation can thus, comprise comparing parameters of a particle foam component with reference parameters of a reference particle foam component 30 to determine current or future deviations.

The parameter data set can specify at least one of the following parameters:
At least one chemical and/or physical process parameter, e.g. atmosphere, temperature, pressure, radiation parameters, such as radiation power, radiation intensity, mold temperature, of at least one primary process. Further, one or more of the following process parameters: cracking level, filling level, compression ratio, process-times, such as fusing time, cooling time, stabilization time, cycle time, amount and/or type of additive used, amount of water used, can be considered. Hence, one or more chemical and/or physical process parameters of at least one primary process can be taken into consideration for the evaluation and evaluated with respect to the at least one evaluation criterion, respectively. A respective evaluation criterion can thus, comprise reference chemical and/or physical process parameters which are processed in at least one reference primary process.

At least one chemical and/or physical parameter, e.g. atmosphere, acoustic properties, optical properties, e.g. color, color distribution, chemical composition, electrical properties, such as dielectric strength, resistivity, permittivity, susceptibility, acoustic properties, electric properties, optical properties, thermal properties, pressure, temperature, humidity, density, hardness, weight, cell size, cell size distribution, cell morphology, cell morphology distribution, internal cell pressure, internal cell pressure distribution, of the expandable or expanded polymer particles which are processed in the at least one primary process. Hence, one or more chemical and/or physical parameters of the expandable or expanded polymer particles which are processed in the at least one primary process can be taken into consideration for the evaluation and evaluated with respect to the at least one evaluation criterion, respectively. A respective evaluation criterion can thus, comprise reference chemical and/or physical parameters of the expandable or expanded polymer particles which are processed in at least one reference primary process.

At least one geometric parameter, e.g. shape, e.g. bead- or ring-shape, size, surface structure, of the expandable or expanded polymer particles which are processed in the at least one primary process. Hence, one or more geometric parameters of the expandable or expanded polymer particles which are processed in the at least one primary process can be taken into consideration for the evaluation and evaluated with respect to the at least one evaluation criterion, respectively. A respective evaluation criterion can thus, comprise reference geometric parameters of the expandable or expanded polymer particles which are processed in at least one reference primary process.

At least one chemical and/or physical parameter, e.g. acoustic properties, mechanical properties, chemical composition, color, color distribution, chemical composition, electrical properties, such as dielectric strength, resistivity, permittivity, susceptibility pressure, temperature, humidity, density, hardness, weight, surface properties, e.g. roughness, external or internal voids, cell size, cell size distribution, cell morphology, cell morphology distribution, internal cell pressure, internal cell pressure distribution, fusion level, fire properties, shrinkage, warpage, acoustic properties, optical properties, e.g. translucence, emission behavior, water tightness, of the particle foam component 30 which is formed or which is to be formed. Hence, one or more chemical and/or physical parameters of a particle foam component 30 can be taken into consideration for the evaluation and evaluated with respect to the at least one evaluation criterion, respectively. A respective evaluation criterion can thus, comprise reference chemical and/or physical parameters of a particle foam component 30 which is formed or which is to be formed.

At least one geometric parameter, e.g. shape, size, surface structure, e.g. roughness, of the particle foam component 30 which is formed of which is to be formed. Hence, one or more geometric parameters of a particle foam component 30 can be taken into consideration for the evaluation and evaluated with respect to the at least one evaluation criterion, respectively. A respective evaluation criterion can thus, comprise reference geometric parameters of a particle foam component 30 which is formed or which is to be formed.

At least one chemical and/or physical process parameter, e.g. atmosphere, temperature, pressure, process time, of at least one secondary process. Hence, one or more chemical and/or physical process parameters of at least one secondary process can be taken into consideration for the evaluation and evaluated with respect to the at least one evaluation criterion, respectively. A respective evaluation criterion can thus, comprise reference chemical and/or physical process parameters of at least one reference secondary process.

At least one chemical and/or physical parameter, e.g. chemical composition, pressure, temperature, humidity, density, hardness, weight, of the particle foam component 30 which is further processed in the at least one secondary process. Hence, one or more chemical and/or physical parameters of a particle foam component 30 which is further processed in the at least one secondary process can be taken into consideration for the evaluation and evaluated with respect to the at least one evaluation criterion, respectively. A respective evaluation criterion can thus, comprise reference chemical and/or physical parameters of the particle foam component 30 which is further processed in at least one reference secondary process.

At least one geometric parameter, e.g. shape, size, surface structure, of the particle foam component 30 which is further processed in the at least one secondary process. Hence, one or more geometric parameters of a particle foam component 30 which is further processed in the at least one secondary process can be taken into consideration for the evaluation and evaluated with respect to the at least one evaluation criterion, respectively. A respective evaluation criterion can thus, comprise reference geometric parameters of the particle foam component 30 which is further processed in at least one reference secondary process.

At least one connection parameter, e.g. a connection force or strength, and/or fitting parameter, e.g. a fitting force or strength, of the particle foam component 30 which is further processed in the at least one secondary process. Hence, one or more connection parameters, which might generally include mechanical characteristics, such as yield strength, flexural strength, etc., can be taken into consideration for the evaluation and evaluated with respect to the at least one evaluation criterion, respectively. A respective evaluation criterion can thus, comprise reference connection parameters of the particle foam component 30 which is further processed in the at least one secondary process.

In either case, the parameter data set may specify multiple process parameters which may reflect a "process parameter matrix" or a "process window" of the respective primary or secondary process. A respective process parameter matrix or process window of a primary process can refer to at least one specific process parameter range, such as a temperature range, pressure range, for instance. A respective process parameter matrix or process window can refer to dependencies between two different process parameters, such as dependencies of process temperature vs. process pressure as applied in a respective primary and/or secondary process, for instance. Also, dependencies of one or more process parameters over time and/or location, e.g. within a mold or mold cavity, can be considered.

The at least one evaluation criterion can be or refer to a quality criterion and/or an efficiency criterion of the at least one primary process or to a quality criterion of the particle foam component 30 formed in accordance with the at least one primary process. As such, the parameter data set and the parameters specified therein, respectively can be evaluated with respect to a quality criterion and/or an efficiency criterion of the at least one primary process or to a quality criterion of the particle foam component 30 formed in accordance with the at least one primary process. This also means that the evaluation data can be indicative of at least one current or future deviation of at least one parameter specified by the parameter data set with respect to the at least one quality criterion and/or with respect to the at least one efficiency criterion of the at least one primary process and/or with respect to the at least one quality criterion of the particle foam component 30 formed in accordance with the at least one primary process.

Alternatively or additionally, the at least one evaluation criterion can be or can refer to a quality criterion and/or an efficiency criterion of the at least one secondary process. As such, quality and/or efficiency of respective primary and secondary processes can be evaluated and used at least for operating of at least one primary apparatus 20, e.g. to perform adjustments to one or more process parameters, e.g. temperature, pressure, etc., so as to compensate for or reduce current deviations of process quality and/or process efficiency and/or to avoid or reduce future deviations of process quality and/or process efficiency. A respective quality criterion typically aims at a desired quality, which can be a specific threshold quality or a maximum quality. Likewise, a respective efficiency criterion typically aims at a desired efficiency, which can be a specific threshold efficiency or a maximum efficiency.

Further, the at least one evaluation criterion can be or refer to an energy consumption criterion, e.g. indicative of a carbon footprint, of the at least one primary process or a particle foam component formed in accordance with the at least one primary process. As such, the parameter data set and the parameters specified therein, respectively can be evaluated with respect to an energy consumption criterion. This also means that the evaluation data can be indicative of at least one current or future deviation of at least one parameter specified by the parameter data set with respect to at least one energy consumption criterion.

Alternatively or additionally, the at least one evaluation criterion can be or can refer to an energy consumption criterion of the at least one secondary process. As such, energy consumption of respective primary and secondary processes can be evaluated and used at least for operating of the or a secondary apparatus, e.g. to perform adjustments to one or more process parameters, e.g. temperature, pressure, etc., so as to compensate for or reduce current deviations of energy consumption and/or to avoid or reduce future deviations of energy consumption. A respective energy consumption criterion typically aims at a desired energy consumption, which can be a specific threshold energy consumption or a minimum energy consumption.

The at least one data processing unit 40 can comprise or implement algorithms, particularly machine learning algorithms, more particularly neuronal networks, for evaluating the received parameter data set and for generating the evaluation data set. Respective algorithms can be highly efficient with respect to the evaluation of the parameter data set and the parameters specified therein, respectively and thus, the use of respective algorithms has a technical effect on improving operation of the or a primary apparatus 20. Likewise, the use of respective algorithms has a technical effect on improved control of operation of the or a primary apparatus 20. Improving operation or control of operation of the or a primary apparatus 20 typically also improves the quality of the particle foam component 30 manufactured in accordance with the primary process.

The data processing unit 40 can comprise or implement algorithms, particularly machine learning algorithms, for linking at least one parameter of the at least one primary process with a specific process outcome, particularly a specific process quality, of the at least one primary process. Linking at least one parameter of the at least one primary process with a specific process outcome, particularly a specific process quality, of the at least one primary process enables an improved analyzing and evaluating operation of the primary process because the data processing unit 40 can predict respective outcomes on the basis of respective parameters. This can significantly improve the quality of the or a primary process e.g. because undesired outcomes can be (predictively) identified and avoided. As such, the use of respective algorithms has a technical effect on improving operation of the or a primary apparatus 20 which will typically, also have an effect of the quality of the particle foam component 30manufactured in accordance with the primary process.

Alternatively or additionally, the data processing unit 40 can comprise or implement algorithms, particularly machine learning algorithms, for linking at least one parameter of at least one secondary process with a specific process outcome, particularly a specific process quality, of the at least one secondary process. Linking at least one parameter of the at least one secondary process with a specific process outcome, particularly a specific process quality, of the at least one secondary process enables an improved analyzing and evaluating operation of the primary and/or secondary process because the data processing unit 40 can predict respective outcomes on the basis of respective parameters. This can significantly improve the quality of the primary and/or secondary process e.g. because undesired outcomes can be (predictively) identified and avoided. As such, the use of respective algorithms has a technical effect on improving operation of the or a primary and/or a secondary apparatus 20, 50 which will typically, also have an effect of the quality of the particle foam component 30 further processed in accordance with the secondary process.

Further, the data processing unit 40 can comprise or implement algorithms, particularly machine learning algorithms, particularly neuronal networks, for defining the at least one evaluation criterion. As such, also the at least one evaluation criterion can be defined via the data processing unit 40 and via respective algorithms, respectively which enables automatically generating a one- or multidimensional evaluation matrix for a specific primary and/or secondary process and/or a one- or multidimensional evaluation matrix for a specific particle foam component 30 which is to be formed in a primary process and/or further processed in a respective secondary process. As an example, a respective algorithm can take into account of one or more component target properties, such as shape, dimensions, weight, etc., of a particle foam component 30 and uses these component target properties to define the at least one evaluation criterion due to knowledge about relationship between respective component target properties and process parameters, for instance. As a concrete example, the algorithm can use information specifying that specific component target properties of a particle foam component 30 can only be achieved with specific process parameters which information is then used for defining at least one evaluation criterion when specific target properties of a particle foam component 30 are to be achieved.

Further, the at least one data processing unit 40 can comprise or implement machine learning algorithms, particularly neuronal networks, for modifying the at least one at least one evaluation criterion to receive a modified evaluation criterion. As such, respective algorithms can also be used to modify at least one evaluation criterion, e.g. to achieve a respective process quality, process efficiency, process energy consumption, or respective component target properties of a particle foam component 30. As an example, a quality criterion can be modified when a higher efficiency of a primary process is desired which means that a respective primary apparatus 20 can be operated with different process parameters, such as a shortened fusing time, for instance which increases the efficiency of the primary process but might decrease the quality of the particle foam component 30, e.g. due to voids, surface errors, fusion level, etc., which might not be important for the respective particle foam component 30 given the desired efficiency though. Likewise, an efficiency criterion could be modified when a higher quality of the particle foam component 30 is desired which means that a respective primary apparatus 30 can be operated with different process parameters, such as an extended fusing time, for instance which increases the quality of the particle foam component 30, e..g. due to a reduction of voids, surface errors, fusion level, etc., but might decrease the efficiency of the primary process which might not be important for the respective process given the desired quality though.

The method can comprise a step of correlating at least one currently implemented parameter specified by the parameter data set with at least one other parameter to receive a parameter set to generate a correlated parameter data set which includes the at least one currently implemented parameter and the at least one other parameter. The method may then further comprise a step of operating the at least one primary apparatus 20 based on the correlated parameter data set. Operating the at least one primary apparatus on the correlated parameter data set can particularly result in an improved quality of the at least one primary process or in an improved quality of the particle foam component 30 formed in accordance with the at least one primary process. As an example, a respective currently implemented parameter specified by the parameter data set could be a fusing temperature and/or a fusing time. The fusing temperature and/or fusing time and/or fusion level could be correlated with a specific steam pressure to generate a correlated parameter data set which includes the fusing temperature and/or a fusing time and/or fusion level and the steam pressure. When the primary apparatus 20 is operated on basis of the correlated parameter data set, i.e. the primary apparatus 20 implements the fusing temperature and/or fusing time and/or fusion level and the correlated steam pressure, an improved quality of the particle foam component 30 can be achieved relative to operating the primary apparatus not on basis of the correlated parameter data set. A respective correlation of currently implemented parameters with other parameters, can be effected through the use of a look-up table, for instance which is stored in the data processing unit 40 or which can be accessed via the data processing unit 40. A respective look-up table can include correlated couples of parameters which will, when implemented during operation of the primary apparatus 20, result in a specific process quality, process efficiency, or component quality, for instance. Of course, this principle can also be implemented for operating multiple primary apparatuses 20.

The method can also comprise the steps of: receiving, at the data processing unit 40, a parameter data set specifying at least one parameter of at least one secondary process for further processing a particle foam component 30; evaluating, via the data processing unit 40, the parameter data set with respect to at least one evaluation criterion and generating an evaluation data set indicative of at least one current or future deviation of at least one parameter specified by the parameter data set with respect to the at least one evaluation criterion; communicating the evaluation data set to the at least one primary apparatus 20 (optionally); and operating the at least one primary apparatus 20 based on the evaluation data set. As such, evaluation information concerning a respective secondary process can be used for controlling operation of a respective primary process. In such a manner, possible deficiencies of a particle foam component 30 which show up in a respective secondary process can be used for controlling operation of a respective primary process.

A respective control of operation of the respective primary process will typically, comprise adjusting at least one of: a process parameter of the or a primary process and at least one parameter of a particle foam component 30 which is formed or which is to be formed to compensate for the possible deficiencies of a particle foam component 30 which show up in a respective secondary process. As an example, fusing parameters influencing the surface quality of a particle foam component 30 can be adjusted in a primary process when a secondary process shows that the surface quality of a particle foam component 30 is not sufficient, e.g. with respect to a welding process, etc.

## Claims

1. A method of operating at least one apparatus (20) for processing expandable or expanded polymer particles to form a particle foam component (30), the method comprising:
- receiving, at at least one data processing unit (40), a parameter data set specifying at least one of: at least one parameter of at least one primary process for processing expandable or expanded polymer particles, e.g. to form a particle foam component (30), at least one parameter of at least one secondary process for further processing a particle foam component (30), or at least one parameter of a particle foam component (30);
- evaluating, via the at least one data processing unit (40), the parameter data set with respect to at least one evaluation criterion and generating an evaluation data set indicative of at least one current or future deviation of at least one parameter specified by the parameter data set with respect to the at least one evaluation criterion; and
- operating at least one apparatus (20) for processing expandable or expanded polymer particles to form a particle foam component (30) based on the evaluation data set.

2. The method of claim 1, wherein the at least one evaluation criterion is or comprises at least one of: at least one reference parameter of a reference primary process for processing expandable or expanded polymer particles, e.g. to form a particle foam component, at least one reference parameter of at least one reference secondary process for further processing a particle foam component, or at least one reference parameter of a reference particle foam component.

3. The method of claim 1 or 2, wherein the parameter data set specifies at least one of:
- at least one chemical and/or physical process parameter of at least one primary process for processing expandable or expanded polymer particles, e.g. to form a particle foam component,
- at least one chemical and/or physical parameter of the expandable or expanded polymer particles which are processed in the at least one primary process for processing expandable or expanded polymer particles, e.g. to form a particle foam component;
- at least one geometric parameter of the expandable or expanded polymer particles which are processed in the at least one primary process;
- at least one chemical and/or physical process parameter of at least one secondary process;
- at least one chemical and/or physical parameter of the particle foam component which is formed;
- at least one geometric parameter of the particle foam component which is formed;
- at least one chemical and/or physical parameter of the particle foam component which is processed in the at least one secondary process;
- at least one geometric parameter of the particle foam component which is processed in the at least one secondary process;
- at least one connection parameter, e.g. a connection force, and/or fitting parameter, e.g. a fitting force, of the particle foam component, particularly with at least one other component, which is processed in the at least one secondary process.

4. The method of any one of the preceding claims, wherein the at least one evaluation criterion is or refers to a quality criterion and/or an efficiency criterion of the at least one primary process or of a quality criterion of the particle foam component formed in accordance with the at least one primary process; and/or wherein the at least one evaluation criterion is or refers to a quality criterion and/or an efficiency criterion of the at least one secondary process.

5. The method of any one of the preceding claims, wherein the at least one evaluation criterion is or refers to an energy consumption criterion of the at least one primary process or of a particle foam component formed in accordance with the at least one primary process; and/or
wherein the at least one evaluation criterion is or refers to an energy consumption criterion of the at least one secondary process.

6. The method of any one of the preceding claims, wherein the at least one data processing unit (40) comprises or implements algorithms, particularly machine learning algorithms, more particularly neuronal networks, for generating the evaluation data set.

7. The method of any one of the preceding claims, wherein the at least one data processing unit (40) comprises or implements algorithms, particularly machine learning algorithms, for linking at least one parameter of the at least one primary process with a specific process outcome, particularly a specific-quality outcome, of the at least one primary process; and/or
wherein the at least one data processing unit (40) comprises or implements algorithms, particularly machine learning algorithms, for linking at least one parameter of at least one secondary process with a specific process outcome, particularly a specific quality outcome, of the at least one secondary process.

8. The method of any one of the preceding claims, wherein the at least one data processing unit (40) comprises or implements algorithms, particularly machine learning algorithms, particularly neuronal networks, for defining the at least one evaluation criterion.

9. The method of any one of the preceding claims, wherein the at least one data processing unit (40) comprises or implements machine learning algorithms, particularly neuronal networks, for modifying the at least one evaluation criterion to receive a modified evaluation criterion.

10. The method of any one of the preceding claims, wherein the at least one primary process comprises a chemical and/or physical pre-treatment of expandable or expanded polymer particles which are to be fused together to form a particle foam component, and/or comprises fusing expandable or expanded polymer particles to form a particle foam component, particularly in a convective or non-convective process in which the expandable or expanded polymer particles are fused together to form a particle foam component (30), and/or a chemical and/or physical post-treatment of at least one particle foam component (30); and/or wherein the at least one secondary process for further processing a particle foam component (30) comprises a connecting process in which the particle foam component (30) is connected, e.g. by welding, with at least one other component.

11. The method of any one of the preceding claims, wherein operating the at least one apparatus (20) for processing expandable or expanded polymer particles in the at least one primary process based on the evaluation data set comprises, particularly at least semi-automatically, adjusting at least one parameter of the at least one primary process.

12. The method of any one of the preceding claims, further comprising correlating at least one currently implemented parameter specified by the parameter data set with at least one other parameter to generate a correlated parameter data set which includes the at least one currently implemented parameter and the at least one other parameter, wherein
operating the at least one apparatus (20) for performing the at least one primary process to form a particle foam component (30) based on the correlated parameter data set results in an improved quality of the at least one primary process or in an improved quality of the expandable or expanded polymer particles processed in accordance with the at least one primary process, or in an improved quality of the particle foam component (30) formed in accordance with the at least one primary process.

13. The method of any one of the preceding claims, wherein operating the at least one apparatus (20) for performing the at least one primary process to form a particle foam component (30) based on the evaluation data set comprises adjusting at least one process parameter of the at least one primary process, which at least one process parameter comprises a current or future deviation with respect to the at least one evaluation criterion, such that the current or future deviation of the at least one process parameter with respect to the at least one evaluation criterion is reduced at least to a certain degree.

14. The method of any one of the preceding claims, comprising:
- receiving, at the at least one data processing unit (40), a parameter data set specifying at least one parameter of at least one secondary process;
- evaluating, via the at least one data processing unit (40), the parameter data set with respect to at least one evaluation criterion and generating an evaluation data set indicative of at least one current or future deviation of at least one parameter specified by the parameter data set with respect to the at least one evaluation criterion;
- operating the at least one apparatus (20) for performing the at least one primary process for processing expandable or expanded polymer particles to form a particle foam component (30) based on the evaluation data set.

15. A system (10), comprising at least one data processing unit (40) and at least one apparatus (20) for performing a primary process for processing expandable or expanded polymer particles to form a particle foam component (30) the system (10) being configured to implement a method of operating at least one apparatus for processing expandable or expanded polymer particles to form a particle foam component (30) the method comprising:
- receiving, at at least one data processing unit (40), a parameter data set specifying at least one of: at least one parameter of at least one primary process for processing expandable or expanded polymer particles, e.g. to form a particle foam component (30), at least one parameter of at least one secondary process for processing a particle foam component (30), or at least one parameter of a particle foam component (30);
- evaluating, via the at least one data processing unit (40), the parameter data set with respect to at least one evaluation criterion and generating an evaluation data set indicative of at least one current or future deviation of at least one parameter specified by the parameter data set with respect to the at least one evaluation criterion; and
- operating at least one apparatus (20) for processing expandable or expanded polymer particles to form a particle foam component (30) based on the evaluation data set.
